# EUROPÄISCHE PATENTANMELDUNG

(11) **EP 2 034 274 A1**
(43) Veröffentlichungstag der Anmeldung: **11.03.2009**
(21) Anmeldenummer: 08105063.5
(22) Anmeldetag: 18.08.2008
(51) Int. Cl.: G01C 21/36

(54) **Karten-Anzeigeeinrichtung und Verfahren dazu**

(30) Priorität: 07.09.2007 DE 102007042719
(71) Anmelder: ROBERT BOSCH GMBH, 70442 Stuttgart (DE)
(72) Erfinder: Rychlak, Stefan, 31241, Ilsede (DE)

(57) **Zusammenfassung**

Vorgeschlagen werden
eine Karten-Anzeigeeinrichtung mit einer Anzeigeeinheit zur Darstellung eines Kartenausschnitts, mit Auswahlmitteln zum Bestimmen eines Teilbereichs des auf der Anzeigeeinheit darzustellenden Kartenausschnitts derart, dass dieser einen Manöverpunkt und/oder einen Standort oder einen Ereignisort umfasst und mit Mitteln zur Ansteuerung der Anzeigeeinheit derart, dass im ausgewählten Teilbereich enthaltene Kartenelemente gegenüber dem übrigen Kartenausschnitt hervorgehoben dargestellt werden
sowie ein Verfahren zur Steuerung einer Kartendarstellung auf einer Anzeigeeinheit, wobei ein Teilbereich eines auf der Anzeigeeinheit darzustellenden Kartenausschnitts bestimmt wird, welcher Teilbereich einen Manöverpunkt und/oder Standort oder einen Ereignisort umfasst und wobei im ausgewählten Teilbereich enthaltene Kartenelemente gegenüber dem übrigen Kartenausschnitt hervorgehoben dargestellt werden.

Die Erfindung hat den besonderen Vorteil, dass der Benutzer die für ihn besonders wichtigen Informationen innerhalb einer Kartendarstellung auf einer Anzeigeeinrichtung besonders schnell erfassen kann.

## Beschreibung

### Stand der Technik

Die Erfindung geht von einer Anordnung und einem Verfahren nach der Gattung der unabhängigen Patentansprüche aus.

In EP-A-0 795 433 ist eine Anordnung zur Steuerung einer Anzeige in einem Kraftfahrzeug in Abhängigkeit unter anderem einer Umgebungsbeleuchtung beschrieben, die eine Darstellung auf der Anzeige zwischen einem Tag- und einem Nachtbetrieb umschaltet. Tag- und Nachtbetrieb unterscheiden sich zum einen in den für die Darstellung verwendeten Farbpaletten, nämlich helle Farben für Tag-, dunkle Farben für Nachbetrieb, zum anderen in der Helligkeit der Darstellung, nämlich hohe Anzeigehelligkeit im Tag-, demgegenüber reduzierte Helligkeit im Nachtbetrieb. Ziel der EP-A-0 795 433 ist es, eine Ablenkung oder Störung des Fahrzeugführers durch die Anzeige zu verhindern. Dazu wird weiterhin eine Blickrichtung des Fahrzeugführers bestimmt und die Anzeigehelligkeit weiter reduziert, wenn die Anzeige in das Blickfeld des Fahrzeugführers gerät. Im Falle der Darstellung besonders dringlicher Warnmeldungen auf der Anzeige wird diese weitere Reduzierung der Anzeigehelligkeit außer Kraft gesetzt.

### Vorteile der Erfindung

Die Erfindung mit den Merkmalen der unabhängigen Patentansprüche hat demgegenüber den besonderen Vorteil, dass der Benutzer die für ihn besonders wichtigen Informationen innerhalb einer Kartendarstellung auf einer Anzeigeeinrichtung besonders schnell erfassen kann.

Von besonderem Vorteil ist es, wenn dazu ein Manöverpunkts und/oder ein Standort erfasst, sodann ein Teilbereich des auf der Anzeigeeinheit dargestellten oder darzustellenden Kartenausschnitts bestimmt wird, der den Manöverpunkt und/oder den Standort umfasst und die Anzeigeeinheit schließlich derart angesteuert wird, dass im ausgewählten Teilbereich enthaltene Kartenelemente gegenüber dem übrigen Kartenausschnitt hervorgehoben dargestellt werden.

Die hervorgehobenen Darstellung kann sich dabei auf einzelne Kartenelemente des ausgewählten Teilbereichs, wie insbesondere Straßenzüge oder allgemein Verkehrswege, des weiteren flächige Elemente, wie insbesondere Bebauungsflächen, landwirtschaftliche Nutzflächen, Waldflächen und dergleichen, oder weiterhin etwa Punkte oder Orte besonderen Interesses, auch als POI (Point of Interest) bezeichnet, wie Infrastruktureinrichtungen, etwa Bahnhöfe, Tankstellen, Hotels und andere, beziehen. Daneben kann sich die hervorgehobene Darstellung vorteilhaft auch auf den gesamten ausgewählten Teilbereich oder auf alle in diesem Teilbereich dargestellten Kartenelemente beziehen. In diesem Fall erscheint der ausgewählte Teilbereich gegenüber der übrigen Kartendarstellung wie durch einen zusätzlichen Spot-Strahler beleuchtet. Dies hat den besonderen Vorteil, dass der ausgewählte Teilbereich einen Blickfang für den Betrachter darstellt, so dass dessen Augenmerk auf die ausgewählten Teilbereich und damit die darin enthaltenen besonderes wichtigen Informationen gelenkt wird. Damit entfällt seitens des Benutzers die Suche nach für ihn wichtigen Informationen innerhalb einer Kartendarstellung oder wird zumindest reduziert.

Vorteilhaft kann die hervorgehobene Darstellung durch eine hellere Beleuchtung zumindest eines Teils der in dem ausgewählten Teilbereich dargestellten Elemente oder alternativ des gesamten ausgewählten Teilbereichs erfolgen. Vorteilhaft kann die hervorgehobene Darstellung alternativ oder ergänzend zur helleren Beleuchtung auch mit einer anderen Farbgebung erfolgen.

Beispielsweise können die oder einzelne Elemente innerhalb des Teilbereichs oder der gesamte Teilbereich in helleren Farben gegenüber dunkleren Farben des restlichen Kartenausschnitts, in intensiveren gegenüber blasseren Farben, in farblicher Darstellung gegenüber Schwarz-Weiß-Darstellung mit höherem gegenüber geringerem Kontrast usw. dargestellt werden. Diese Aufzählung ist dabei nur beispielhaft und nicht abschließend.

Vorteilhaft kann die gegenüber dem übrigen Kartenausschnitt hervorgehobene Darstellung in Abhängigkeit des Eintretens eines bestimmten Ereignisses gesteuert werden. Dies hat den Vorteil, dass die Aufmerksamkeit des Benutzers nur dann auf die Anzeigeeinheit gezogen wird, wenn darauf für ihn besonders wichtige Informationen dargestellt werden, während die Anzeigeeinheit ansonsten unauffällig erscheint und den Benutzer daher nicht von sonstigen Aufgaben ablenkt. Beispielsweise kann die Erfindung vorteilhaft bei einem Navigationsgerät, insbesondere bei einem Fahrzeugnavigationsgerät eingesetzt werden, das einen Fahrzeugführer durch Fahrrichtungshinweise von einem aktuellen Standort entlang einer Route zu einem Zielort führt. Ist bei einem solchen Navigationsgerät in einer Kartendarstellung die oder ein Abschnitt der Route eingezeichnet, kann vorteilhaft die hervorgehobene Darstellung bei Annäherung des aktuellen Standorts an einen Manöverpunkt, insbesondere einen Abbiegepunkt, eingestellt werden. Wird zusätzlich ein akustischer oder auch optischer Zielführungshinweis ausgegeben, kann die hervorgehobene Darstellung vorteilhaft auch an den Zeitpunkt der Ausgabe des Zielführungshinweises gekoppelt werden. Der für die hervorgehobene Darstellung ausgewählte Teilbereich kann hierbei vorzugsweise zumindest den Manöverpunkt, im vorliegenden Fall also den Abbiegepunkt oder einen Punkt, auf den sich eine Fahranweisung bezieht, bevorzugt den aktuellen Standort und den Manöverpunkt und das dazwischen liegende Gebiet, umfassen. Die hervorgehobene Darstellung kann bei dieser Ausführungsform vorzugsweise nach Passieren des Manöverpunkts aufgehoben werden.

Zeichnungen

Ausführungsbeispiele der Erfindung sind in den Figuren dargestellt und werden nachfolgend näher erläutert.

### Es zeigen

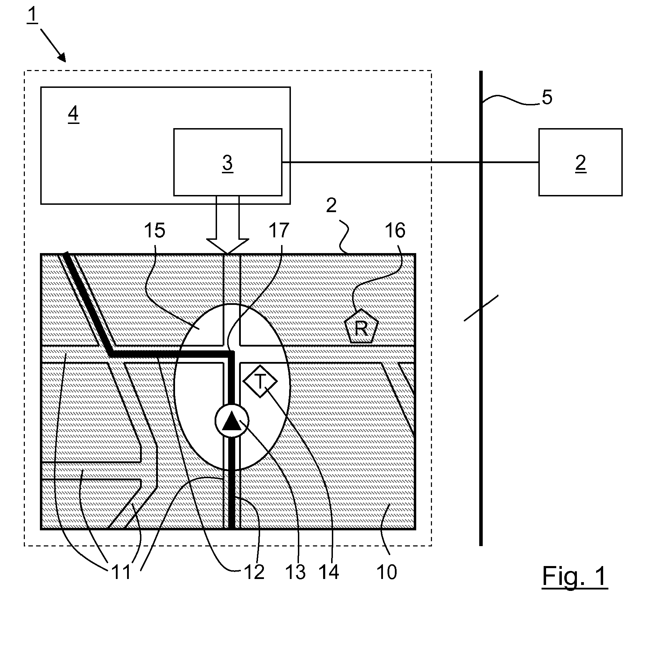

Figur 1 zeigt ein Blockschaltbild eines Geräts mit einer erfindungsgemäßen Anzeigeeinrichtung sowie einer erfindungsgemäßen Anordnung zur Steuerung einer Anzeige und beispielhaft dem Inhalt der Anzeige.

### Beschreibung der Ausführungsbeispiele

Die Erfindung wird nachfolgend am Beispiel eines Fahrzeugnavigationssystems, nachfolgend auch vereinfachend als Navigationssystem bezeichnet, als Beispiel für eine erfindungsgemäße Karten-Anzeigeeinrichtung erläutert. Dies ist jedoch nicht im Sinne einer Einschränkung der Erfindung auf diesen Anwendungsfall zu verstehen.

Das Navigationssystem 1 umfasst in an sich bekannter Weise eine Anzeigeeinheit 2 zur Darstellung von Informationen für den Benutzer, insbesondere den Fahrzeugführer. Im Zusammenhang mit der vorliegenden Erfindung dient die Anzeigeeinheit 2 der Darstellung eines Kartenausschnitts 10 einer Land- oder Straßenkarte und darin eingezeichneter weiterer Informationen. Bei den weiteren Informationen kann es sich insbesondere um eine Fahrroute 12, die einem Straßennetz 11 überlagert ist, einen Fahrzeugstandort 13, daneben beispielsweise POIs, wie Tankstelle 14, Restaurant 16 und dergleichen handeln. Die Anzeigeinheit 2 ist beispielsweise als Flüssigkristallanzeige (LCD = Liquid Cristal Display) ausgebildet.

Die Anzeigeeinheit 2 wird zur Darstellung von Bildinhalten von einer Anzeigesteuerung 3 angesteuert, die Bilddaten und weitere Parameter in elektrische Signale zur Ansteuerung der Flüssigkristallanzeige umsetzt.

Das Navigationssystem 1 umfasst weiterhin eine Steuerung 4, die sämtliche Gerätefunktionen in an sich bekannter Weise steuert. Die Steuerung 4 ist vorzugsweise als Rechner ausgebildet, der dazu ein Betriebsprogramm abarbeitet. Die Anzeigesteuerung 3 ist vorzugsweise ebenfalls als durch den Rechner abzuarbeitendes Programmmodul des Betriebsprogramms und mit einer Schnittstelle zur Ansteuerung der Anzeigeeinheit 2 ausgeführt.

Nach Eingabe eines Fahrziels durch den Benutzer über eine nicht dargestellte Eingabeeinheit des Navigationssystems 1 und nach Bestimmung eines aktuellen Standorts des Navigationssystems 1 mit einer ebenfalls nicht dargestellten Ortungseinheit, beispielsweise auf Basis eines Satelliten-Ortungssystems, berechnet die Steuerung 4 in an sich bekannter Weise unter Rückgriff auf Verkehrswege umfassende, gespeicherte Kartendaten eine Fahrroute vom Standort zum Zielort. Als Ergebnis liegt eine Fahrroute vor, entlang der das Navigationssystem 1 den Benutzer durch Ausgabe von Zielführungshinweisen, insbesondere von akustisch wiedergegebenen, synthetisierten Sprachhinweisen führt. Die Ausgabe der Zielführungshinweise wird dabei in Abhängigkeit einer Annäherung eines jeweils aktuellen Standorts 13 an einen auf der Route in Fahrrichtung nächstfolgenden Manöverpunkt gesteuert. Ein Manöverpunkt bezeichnet dabei vorzugsweise einen Punkt auf der Fahrroute, zu dem ein Fahrrichtungshinweis ausgegeben wird, um dem Benutzer das Befolgen der Route zu erleichtern. Ein Manöverpunkt ist insbesondere ein Punkt 17, wie eine Kreuzung oder Einmündung, an dem die Route 12 von einer aktuell befahrenen Straße abbiegt, weiter können dies aber auch Punkte sein, zu denen Hinweise hilfreich oder sinnvoll sind, beispielsweise an Kreuzungen abknickende Straßen, wobei für den ortskundigen Benutzer nicht ohne weiteres ersichtlich ist, welcher Straße er folgen soll, Hinweise auf einen zum Abbiegen von der aktuelle befahrenen Straße erforderlichen Spurwechsel auf eine Abbiegspur und dergleichen mehr. Ein Fahrrichtungshinweis wird dabei bevorzugt ausgegeben, wenn sich der aktuelle Standort bis auf einen Entfernungsgrenzwert an den Manöverpunkt angenähert hat. Der Entfernungsgrenzwert kann dabei beispielsweise in Abhängigkeit einer befahrenen Straßenklasse oder einer aktuellen Fahrgeschwindigkeit derart ermittelt werden, dass dem Benutzer eine ausreichende Reaktionszeit bis zum Erreichen des Manöverpunkts verbleibt. Unter Reaktionszeit wird dabei hier eine bestimmte Zeit von beispielsweise einigen zig Sekunden bis hin zu etwa einer Minute verstanden, die als ausreichend ermessen wird, ein am Manöverpunkt auszuführendes Fahrmanöver vorzubereiten, beispielsweise einen Spurwechsel auf eine Abbiegespur vorzunehmen und dergleichen mehr. Die Reaktionszeit kann dabei wiederum von der befahrenen Straßenklasse abhängig bemessen werden.

Bei diesem Fahrzeugnavigationssystem 1 wird auf dessen Anzeigeeinheit 2 ein Kartenausschnitt 10 dargestellt, der den aktuellen Fahrzeugstandort 13 und den nächsten Manöverpunkt 17 umfasst. In diesen Kartenausschnitt sind die Route, vorzugsweise als einem Straßenzug überlagerte, farblich abgesetzte Linie, der Fahrzeugstandort und der auf der Route dem Fahrzeugstandort 13 nächstfolgende Manöverpunkt 17, eingezeichnet.

Bei Annäherung an einen Manöverpunkt 17 bis zu dem vorgenannten Entfernungsgrenzwert wählt die Steuerung 3 einen Teilbereich 15 des darzustellenden Kartenausschnitts aus, welcher Teilbereich 15 vorzugsweise den aktuellen Standort 13, den nächsten Manöverpunkt 17 und das dazwischen liegende Gebiet, insbesondere den dazwischen liegenden Routenabschnitt vollständig umfasst aus. Das Gebiet kann beispielsweise, ohne Beschränkung der Allgemeinheit, in Form einer Ellipse ausgebildet sein. Andere geometrische Formen des ausgewählten Gebiets sind ebenfalls möglich und liegen im Bereich der Erfindung. Nach Festlegung des ausgewählten Teilbereichs 15 steuert die Steuerung 3 die Kartendarstellung derart, dass zumindest ein Teil der innerhalb des gewählten Teilbereichs 15 liegende Kartenelemente 12, 13, 17 gegenüber dem übrigen darzustellenden Kartenausschnitt hervorgehoben dargestellt wird. Beispielsweise werden Straßenzüge, die innerhalb des Teilbereichs 15 liegen, mit gegenüber außerhalb des Teilbereichs liegenden Straßenzügen abweichender Farbgebung, etwa einer kräftigen Farbe für innerhalb des Teilbereichs 15 liegende Straßenzüge gegenüber einer blassen Farbe für außerhalb des Teilbereichs liegende Straßenzüge dargestellt.

In an sich bekannter Weise kann die Displaydarstellung in an sich bekannter Weise in Abhängigkeit einer Umgebungshelligkeit gesteuert werden. Ein in der Fahrgastzelle angeordneter Lichtsensor 2 zur Erfassung der Umgebungshelligkeit in der Fahrgastzelle, alternativ oder ergänzend ein Helligkeitssensor 2 zur Erfassung der Umgebungshelligkeit des Fahrzeugs ist mit einem Fahrzeugbus 5, beispielsweise einem CAN-Bus 5 verbunden. Dieser Sensor dient einer automatischen Fahrlichtsteuerung z.B. für Tunnelfahrten und dergleichen. Alternativ kann im Zusammenhang mit der vorliegenden Erfindung der Lichtsensor 2 auch der Fahrlichtschalter oder ein Schalter für einen Innenraumbeleuchtung sein.

Das erfindungsgemäße Navigationssystem greift auf den Fahrzeugbus 5 zu und erhält daraus die Signale des Lichtsensors 2. In Abhängigkeit der Signale des Lichtsensors 2 wird in an sich bekannter Weise zwischen einem Tag- und einem Nachtschema für die Display-Darstellung umgeschaltet, wobei sich das Nachtschema durch dunkle Farben und eine geringe Leuchtintensität, das Tagschema durch helle Farben und eine helle Leuchtintensität auszeichnet. Erfindungsgemäß steuert die Displaysteuerung 3 hier bei aktiviertem Nachtschema die Darstellung innerhalb des ausgewählten Bereichs 15 mit den Parametern des Tagschemas, also mit gegenüber dem Rest des Display-Inhalts helleren Farben und hellerer Beleuchtungsintensität, wobei außerhalb des ausgewählten Bereichs das Nachtschema beibehalten wird.

Vorzugsweise ist im Falle einer aktiven Darstellung mit Tagschema vorgesehen, dass beispielsweise die Informationen außerhalb des hervorgehobenen Bereichs 15 zumindest während der Hervorhebung des Bereichs 15 diesem gegenüber zurückgenommen, etwa mit blasseren Farben, in Schwarz-Weiß statt in Farbe oder dergleichen, dargestellt werden.

Nach Passieren des Abbiegepunktes 17 oder des Manöverpunktes 17 wird die Darstellung des Displays wieder auf den Ausgangszustand zurückgesetzt, das heißt, der gesamte Bildschirminhalt 10 wird vorzugsweise wieder mit für das gesamte Display 2 einheitlichen Parametern dargestellt.

Vorteilhaft kann die Erfindung auch auf die Darstellung von Verkehrsstörungen, die beispielsweise als codierte Meldungen über Rundfunk übertragen werden, angewendet werden. Solche Verkehrsstörungsmeldungen werden beispielsweise als TMC- (Traffic Message Channel)- Informationen unhörbar neben Rundfunkprogramminhalten über Rundfunksignale übertragen und können in mit entsprechenden Empfängern ausgestatteten Fahrzeugnavigationssystemen bei einer Routenberechnung berücksichtigt werden. Weiter können diese Verkehrsstörungsmeldungen zur Information des Fahrzeugführers decodiert und als synthetische Sprachsignale akustisch ausgegeben und des weiteren beispielsweise in Form von Symbolen oder durch farbige Markierungen von betroffenen Streckenabschnitten in einer dargestellten Straßenkarte eingezeichnet werden.

Erfindungsgemäß ist hier vorgesehen, dass bei Empfang einer solchen Verkehrsstörungsmeldung oder allgemeiner einer Meldung über ein verkehrsrelevantes Ereignis, sofern diese die aktuelle Fahrroute oder eine Umgebung des Fahrzeugstandorts oder der Fahrroute betrifft, die Störung oder das Ereignis in die Kartendarstellung 10 eingezeichnet wird und der betroffene Kartenausschnitt bei Sprachausgabe der Meldung als ausgewählter Bereich 15 hervorgehoben dargestellt wird. Liegt der Ort der Verkehrsstörung oder des - ereignisses außerhalb des aktuelle dargestellten Kartenausschnitts 10, wird für den Fall, dass gerade kein Fahrmanöver bevorsteht, bevorzugt der Maßstab der Kartendarstellung so gewählt, dass der Ort der Verkehrsstörung im dargestellten Kartenausschnitt 10 liegt und sodann der betroffene Bereich als ausgewählter Bereich 15 hervorgehoben dargestellt. Nach einer vorgegebenen Haltezeit von beispielsweise 10 Sekunden oder nach Ende der Sprachausgabe der Meldung wird wieder auf die bisherige Darstellung zurückgeschaltet.

## Patentansprüche

1. Karten-Anzeigeeinrichtung (1) mit einer Anzeigeeinheit (2) zur Darstellung eines Kartenausschnitts (10), mit Auswahlmitteln zum Bestimmen eines Teilbereichs (15) des auf der Anzeigeeinheit (2) darzustellenden Kartenausschnitts (10) derart, dass dieser einen Manöverpunkt (17) und/oder einen Standort (13) oder einen Ereignisort umfasst und mit Mitteln (3) zur Ansteuerung der Anzeigeeinheit (2) derart, dass im ausgewählten Teilbereich (15) enthaltene Kartenelemente (12, 13, 14) gegenüber dem übrigen Kartenausschnitt (10) hervorgehoben dargestellt werden.

2. Karten-Anzeigeeinrichtung (1) nach Anspruch 1, **dadurch gekennzeichnet, dass** die hervorgehobene Darstellung mit einer größeren Helligkeit und/oder abweichenden Farbgebung der Kartenelemente (12, 13, 14) gegenüber dem übrigen Kartenausschnitt erfolgt.

3. Karten-Anzeigeeinrichtung (1) nach einem der vorhergehenden Ansprüche, **dadurch gekennzeichnet, dass** sich die gegenüber dem übrigen Kartenausschnitt (10) hervorgehobene Darstellung auf den gesamten ausgewählten Teilbereich (15) erstreckt.

4. Karten-Anzeigeeinrichtung (1) nach einem der vorhergehenden Ansprüche, **dadurch gekennzeichnet, dass** die Anzeigesteuerung (3) die gegenüber dem übrigen Kartenausschnitt (10) hervorgehobene Darstellung in Abhängigkeit des Eintretens eines bestimmten Ereignisses bewirkt.

5. Verfahren zur Steuerung einer Kartendarstellung (10) auf einer Anzeigeeinheit (2), wobei ein Teilbereich (15) eines auf der Anzeigeeinheit (2) darzustellenden Kartenausschnitts (10) bestimmt wird, welcher Teilbereich (15) einen Manöverpunkt (17) und/oder Standort (13) oder einen Ereignisort umfasst und wobei im ausgewählten Teilbereich (15) enthaltene Kartenelemente (12, 13, 14) gegenüber dem übrigen Kartenausschnitt (10) hervorgehoben dargestellt werden.
